(19) Europäisches Patentamt
European Patent Office
Office européen des brevets

(11) **EP 4 708 618 A1**

(12) **EUROPEAN PATENT APPLICATION**

(43) Date of publication:
**11.03.2026 Bulletin 2026/11**

(21) Application number: **25200024.5**

(22) Date of filing: **03.09.2025**

(51) International Patent Classification (IPC):
*H02J 7/00* (2026.01)    *H01M 10/44* (2006.01)
*H01M 10/42* (2006.01)

(52) Cooperative Patent Classification (CPC):
**H02J 7/96; H01M 10/425; H01M 10/44;
H01M 10/48;** H01M 2010/4271; H02J 7/52;
H02J 7/82

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **04.09.2024 KR 20240120168**

(71) Applicant: **SAMSUNG SDI CO., LTD.
Yongin-si, Gyeonggi-do 17084 (KR)**

(72) Inventor: **SEOL, Jun Ha
16678 Suwon-si (KR)**

(74) Representative: **Marks & Clerk LLP
15 Fetter Lane
London EC4A 1BW (GB)**

(54) **BATTERY MANAGEMENT APPARATUS AND METHOD OF CONTROLLING CHARGING/ DISCHARGING USING THE SAME**

(57)    A battery management apparatus includes a measuring unit including at least one sensor, the measuring unit configured to measure a cell voltage of each of a plurality of battery cells in a battery module, and a processor configured to adjust a charging threshold voltage or a discharging threshold voltage based on a difference in cell voltage between the plurality of battery cells and a current state of charge (SOC) of the battery module if charging or discharging the battery module.

FIG. 3

START

START CHARGING — S302

SET FIRST CHARGING THRESHOLD VOLTAGE BASED ON DIFFERENCE IN CELL VOLTAGE AND CURRENT SOC — S304

S306 DOES MAXIMUM CELL VOLTAGE REACH FIRST CHARGING THRESHOLD VOLTAGE? — No / Yes

S308 IS MINIMUM CELL VOLTAGE GREATER THAN OR EQUAL TO REFERENCE CHARGING THRESHOLD VOLTAGE? — No / Yes

S312 SET SECOND CHARGING THRESHOLD VOLTAGE BASED ON DIFFERENCE BETWEEN AVERAGE VOLTAGE AND MINIMUM CELL VOLTAGE

S314 CONTINUE CHARGING

S316 DOES MAXIMUM CELL VOLTAGE REACH SECOND CHARGING THRESHOLD VOLTAGE OR DOES MINIMUM CELL VOLTAGE REACH REFERENCE CHARGING THRESHOLD VOLTAGE? — No / Yes

TERMINATE CHARGING — S310

END

EP 4 708 618 A1

FIG. 4

```
        ( START )
            │
            ▼
┌───────────────────────────┐
│     START DISCHARGING     │──── S402
└───────────────────────────┘
            │
            ▼
┌───────────────────────────┐
│ SET FIRST DISCHARGING     │
│ THRESHOLD VOLTAGE BASED   │──── S404
│ ON DIFFERENCE IN CELL     │
│ VOLTAGE AND CURRENT SOC   │
└───────────────────────────┘
            │
   S406     ▼
       ◇◇◇◇◇◇◇◇◇◇◇◇
     ◇ DOES MINIMUM ◇
   ◇  CELL VOLTAGE REACH FIRST ◇ ── No
   ◇  DISCHARGING THRESHOLD  ◇
     ◇   VOLTAGE?   ◇
       ◇◇◇◇◇◇◇◇◇◇
          │ Yes
```

S406 — DOES MINIMUM CELL VOLTAGE REACH FIRST DISCHARGING THRESHOLD VOLTAGE? — No / Yes

S408 — IS MAXIMUM CELL VOLTAGE LESS THAN OR EQUAL TO REFERENCE DISCHARGING THRESHOLD VOLTAGE? — No / Yes

S412 — SET SECOND DISCHARGING THRESHOLD VOLTAGE BASED ON DIFFERENCE BETWEEN AVERAGE VOLTAGE AND MAXIMUM CELL VOLTAGE

S414 — CONTINUE DISCHARGING

S416 — DOES MINIMUM CELL VOLTAGE REACH SECOND DISCHARGING THRESHOLD VOLTAGE OR DOES MAXIMUM CELL VOLTAGE REACH REFERENCE DISCHARGING THRESHOLD VOLTAGE? — No / Yes

S410 — TERMINATE DISCHARGING

( END )

**Description**

BACKGROUND

1. Field

Embodiments relate to a battery management apparatus and a method of controlling charging and discharging using the same.

2. Description of the Related Art

A battery pack includes battery cells, and peripheral circuits including a charging and discharging circuit. The peripheral circuits are manufactured as a printed circuit board (PCB) and then coupled to the battery cells. If an external power source is connected to an external terminal of the battery pack, the battery cells are charged, and if a load is connected to the external terminal, the battery cells are discharged. The charging and discharging circuit controls charging and discharging of the battery cells between the external terminal and the battery cells. Generally, a plurality of battery cells are connected in series and parallel according to the power consumption capacity of the load.

Even though the battery cells in the battery pack have the same capacity at the time of shipment, an available voltage range for charging and discharging varies depending on chemical properties, such as chemical structure and particle size. As a result, even though cell balancing is performed to match the voltage ranges of the battery cells, repeated charging and discharging lead to variations in capacity among the battery cells, and continuous use causes capacity degradation.

The above information disclosed in this Background section is for enhancement of understanding of the background of the present disclosure, and therefore, it may contain information that does not constitute related (or prior) art.

SUMMARY

Embodiments include a battery management apparatus, including a measuring unit including at least one sensor, the measuring unit configured to measure a cell voltage of each of a plurality of battery cells in a battery module, and a processor configured to adjust a charging threshold voltage or a discharging threshold voltage based on a difference in cell voltage between the plurality of battery cells and a current state of charge (SOC) of the battery module if charging or discharging the battery module.

The processor may further be configured to calculate a maximum voltage deviation of the battery module based on the cell voltage of each of the plurality of battery cells at a start of charging of the battery module, and set a first charging threshold voltage based on at least one of a predetermined reference charging threshold voltage, the maximum voltage deviation, and the current SOC.

The processor may further be configured to compare a minimum cell voltage among all cell voltages with the predetermined reference charging threshold voltage, and terminate the charging or calibrate the first charging threshold voltage based on a comparison result during the charging of the battery module, if a maximum cell voltage among all cell voltages of the plurality of battery cells reaches the first charging threshold voltage.

The processor may further be configured to terminate the charging of the battery module if the minimum cell voltage is greater than or equal to the predetermined reference charging threshold voltage.

The processor may further be configured to increase the first charging threshold voltage to calibrate the first charging threshold voltage to a second charging threshold voltage, and continue charging the battery module if the minimum cell voltage is less than or equal to the predetermined reference charging threshold.

The processor may further be configured to increase the first charging threshold voltage by a difference between an average voltage of all cell voltages of the plurality of battery cells and a minimum cell voltage.

The processor may further be configured to terminate the charging of the battery module during the charging of the battery module, if the maximum cell voltage among all cell voltages of the plurality of battery cells reaches the second charging threshold voltage, or if the minimum cell voltage among all cell voltages reaches the predetermined reference charging threshold voltage.

The processor may further be configured to calculate a maximum voltage deviation of the battery module based on the cell voltage of each of the plurality of battery cells at a start of discharging of the battery module, and set a first discharging threshold voltage based on at least one of a predetermined reference discharging threshold voltage, the maximum voltage deviation, and the current SOC.

During the discharging of the battery module, if a minimum cell voltage among all cell voltages of the plurality of battery cells reaches the first discharging threshold voltage, the processor is configured to compare a maximum cell voltage among all cell voltages with the reference discharging threshold voltage and terminate the discharging or calibrates the first discharging threshold voltage based on a comparison result.

If the minimum cell voltage is less than or equal to the reference discharging threshold voltage, the processor may be configured to terminate the discharging of the battery module.

If the maximum cell voltage is not less than or equal to the reference discharging threshold voltage, the processor may be configured to decrease the first discharging threshold voltage to calibrate the first discharging threshold voltage to a second discharging threshold voltage, and continue discharging the battery module.

The second discharging threshold voltage may be a value that is decreased from a first charging threshold voltage by a difference between an average voltage of all cell voltages of the plurality of battery cells and the maximum cell voltage.

During the discharging of the battery module, if the minimum cell voltage among all cell voltages of the plurality of battery cells reaches the second discharging threshold voltage, or if the maximum cell voltage among all cell voltages reaches the reference discharging threshold voltage, the processor may be configured to terminate the discharging of the battery module.

Embodiments include a method of controlling charging using a battery management apparatus, the method including setting, by a processor, a first charging threshold voltage based on a difference in cell voltage between a plurality of battery cells and a current state of charge (SOC) of a battery module including the plurality of battery cells at a start of charging of the battery module, comparing, by the processor, a minimum cell voltage among cell voltages of the plurality of battery cells with a predetermined reference charging threshold voltage, if a maximum cell voltage among all cell voltages reaches the first charging threshold voltage during the charging of the battery module, and terminating, by the processor, the charging of the battery module if the minimum cell voltage is greater than or equal to the predetermined reference charging threshold voltage.

In the setting of the first charging threshold voltage, the processor may calculate a maximum voltage deviation of the battery module based on a cell voltage of each of the plurality of battery cells, and set the first charging threshold voltage based on at least one of the predetermined reference charging threshold voltage, the maximum voltage deviation, and the current SOC.

The method may further include setting, by the processor, a second charging threshold voltage by increasing the first charging threshold voltage if the minimum cell voltage is not greater than or equal to the predetermined reference charging threshold voltage, and terminating, by the processor, the charging of the battery module if the maximum cell voltage among all cell voltages of the plurality of battery cells reaches the second charging threshold voltage or if the minimum cell voltage among all cell voltages reaches the predetermined reference charging threshold voltage, during the charging of the battery module.

In the setting of the second charging threshold voltage, the processor may set the second charging threshold voltage by increasing the first charging threshold voltage by a difference between an average voltage of all cell voltages of the plurality of battery cells and the minimum cell voltage.

Embodiments include a method of controlling discharging using a battery management apparatus, the method including setting, by a processor, a first discharging threshold voltage based on a difference in cell voltage between a plurality of battery cells and a current state of charge (SOC) of a battery module including the plurality of battery cells at a start of discharging of the battery module, comparing, by the processor, a maximum cell voltage among cell voltages of the plurality of battery cells with a reference discharging threshold voltage, if a minimum cell voltage among all cell voltages reaches the first discharging threshold voltage during the discharging of the battery module, and terminating, by the processor, the discharging of the battery module if the maximum cell voltage is less than or equal to the reference discharging threshold voltage.

The method may further include setting, by the processor, a second discharging threshold voltage by increasing the first discharging threshold voltage if the maximum cell voltage is not less than or equal to the reference discharging threshold voltage, and terminating, by the processor, the discharging of the battery module if the minimum cell voltage among all cell voltages of the plurality of battery cells reaches the second discharging threshold voltage or if the minimum cell voltage among all cell voltages reaches the reference discharging threshold voltage, during the discharging of the battery module.

The processor may further be configured to set the second discharging threshold voltage by increasing the first discharging threshold voltage by a difference between an average voltage of all cell voltages of the plurality of battery cells and the maximum cell voltage.

BRIEF DESCRIPTION OF THE DRAWINGS

Features will become apparent to those of ordinary skill in the art by describing in detail example embodiments with reference to the attached drawings, in which:

FIG. 1 is a diagram schematically illustrating a battery pack according to one or more embodiments of the present disclosure;

FIG. 2 is a block diagram schematically illustrating a configuration of a battery management apparatus according to one or more embodiments of the present disclosure;

FIG. 3 is a flowchart for describing a method of controlling charging of a battery module according to one or more embodiments of the present disclosure; and

FIG. 4 is a flowchart for describing a method of controlling discharging of the battery module according to one or more embodiments of the present disclosure.

DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey example implementations to those skilled in the art.

In the drawing figures, the dimensions of layers and regions may be exaggerated for clarity of illustration. It will also be understood that if a layer or element is referred to as being "on" another layer or substrate, it can be directly on the other layer or substrate, or intervening layers may also be present. Further, it will be understood that if a layer is referred to as being "under" another layer, it can be directly under, and one or more intervening layers may also be present. In addition, it will also be understood that if a layer is referred to as being "between" two layers, it can be the only layer between the two layers, or one or more intervening layers may also be present. Like reference numerals refer to like elements throughout.

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her disclosure in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that if an element or layer is referred to as being "on," "connected to," or "coupled to" another element or layer, it may be directly on, connected, or coupled to the other element or layer or one or more intervening elements or layers may also be present. If an element or layer is referred to as being "directly on," "directly connected to," or "directly coupled to" another element or layer, there are no intervening elements or layers present. For example, if a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" if describing embodiments of the present disclosure relates to "one or more embodiments of the present disclosure." Expressions, such as "at least one of" and "any one of," if preceding a list of elements, modify the entire list of elements and do not modify the individual elements of the list. If phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," if used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. In addition, if a certain parameter is referred to as being uniform in a given region, it may mean that it is uniform in terms of an average.

Throughout the specification, unless otherwise stated, each element may be singular or plural.

If an arbitrary element is referred to as being disposed (or located or positioned) on the "above (or below)" or "on (or under)" a component, it may mean that the arbitrary element is placed in contact with the upper (or lower) surface of the component and may also mean that another component may be interposed between the component and any arbitrary element disposed (or located or positioned) on (or under) the component.

In addition, it will be understood that if an element is referred to as being "coupled," "linked" or "connected" to another element, the elements may be directly "coupled," "linked" or "connected" to each other, or an intervening element may be present therebetween, through which the element may be "coupled," "linked" or "connected" to another element. In addition, if a part is referred to as being "electrically coupled" to another part, the part can be directly connected to another part or an intervening part may be present therebetween such that the part and another part are indirectly connected to each other.

Throughout the specification, if "A and/or B" is stated, it means A, B or A and B, unless otherwise stated. That is, "and/or" includes any or all combinations of a plurality of items enumerated. If "C to D" is stated, it means C or more and D or less, unless otherwise specified.

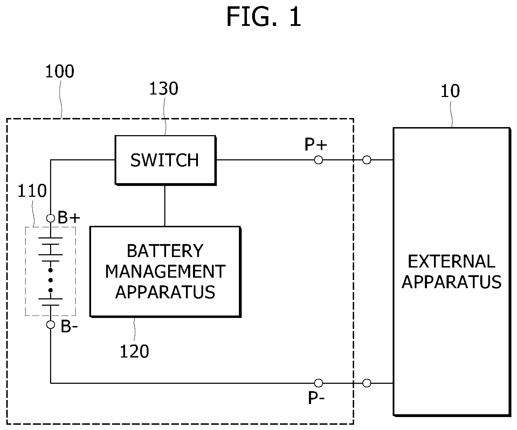

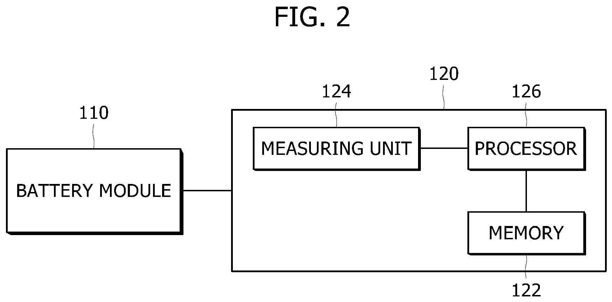

FIG. 1 is a diagram schematically illustrating a battery pack according to one or more embodiments of the present disclosure, and FIG. 2 is a block diagram schematically illustrating a configuration of a battery management apparatus according to one or more embodiments of the present disclosure.

Referring to FIG. 1, a battery pack 100 according to one or more embodiments of the present disclosure has a structure that can be electrically connected to an external apparatus 10 through a positive electrode connection terminal P+ and a negative electrode connection terminal P-.

The external apparatus 10 may be a load that receives power from the battery pack 100 or a charging apparatus that provides power to the battery pack 100 to charge a plurality of battery modules 110. If the external apparatus is a load, the battery pack 100 operates as a power source supplying power to the load and discharges. The external apparatus 10 operating as a load may be, for example, an electronic apparatus or transportation apparatus, and the transportation apparatus may be, for example, an electric vehicle, a hybrid vehicle, or smart mobility.

The battery pack 100 may include at least one battery module 110, a switch 130, and a battery management apparatus 120. Of course, in various embodiments, the battery pack 100 may further include other components.

The battery module 110 may include a plurality of cells connected in series or parallel to each other. The plurality of battery modules 110 may be connected in series or parallel to each other.

The switch 130 may be connected in series with at least one of a plurality of pack terminals P+ and P- between the battery module 110 and the external apparatus 10 and may block or allow an electrical connection between the battery module 110 and the external apparatus 10. The switch 130 may be installed on a current path for charging and discharging the battery module 110.

The switch 130 may control the electrical connection between the battery pack 100 and the external apparatus 10. If the switch 130 is turned on, the battery pack 100 and the external apparatus 10 are electrically connected, and thus charging or discharging is performed. If the switch 130 is turned off, the battery pack 100 and the external apparatus 10 may be electrically disconnected. That is, if the switch 130 is turned on, power may be supplied from the battery module 110 to the external apparatus 10 or from the external apparatus 10 to the battery module 110. While the switch 130 is turned off, the charging and discharging of the battery module 110 may be interrupted. In this case, the switch 130 may be turned on or off under the control of the battery management apparatus 120.

The switch 130 may be implemented as a mechanical relay (contactor) that is turned on/off by the magnetic force of a coil or as a semiconductor switch such as a metal-oxide semiconductor field effect transistor (MOSFET).

The battery management apparatus 120 may monitor the voltage, current, and temperature of the battery module 110, and may calculate a status of charge (SOC) and control charging and discharging of the battery module 110 based on the monitoring results.

As shown in FIG. 2, the battery management apparatus 120 may include a memory 122, a measuring unit 124, and a processor 126. The memory 122, the measuring unit 124, and the processor 126 may constitute a battery management system (BMS).

The memory 122 may store at least one instruction that is executed by the processor 126. In particular, the memory 122 may store instructions (of programs, applications, applets, and the like.) that allow the battery module 110 to adjust a charging or discharging threshold voltage based on a difference in cell voltage between the battery cells and a current SOC of the battery module 110 if charging or discharging the battery module 110, and the stored information may be selectively utilized by the processor 126 as needed. The memory 122 may be implemented as a volatile storage medium and/or a non-volatile storage medium, such as, a read-only memory (ROM), a random access memory (RAM), a flash memory, or an electrically erasable programmable read-only memory (EEPROM).

The measuring unit 124 may measure battery status data indicating a status of the battery module 110, and transmit the measured battery status data to the processor 126. Here, the battery status data may include a cell voltage, a cell current, and a temperature of the battery cell, an SOC of the battery module 110, and the like.

The measuring unit 124 may measure cell voltages of a plurality of battery cells of the battery module 110. For example, the measuring unit 124 may measure the cell voltage of each of the battery cells by measuring a voltage across both ends of each of the plurality of battery cells. In this case, the measuring unit 124 may measure the cell voltage of each battery cell by various methods, and the present disclosure is not limited by these voltage measurement methods. The measuring unit 124 may measure a cell current flowing into or out of the plurality of battery cells.

Accordingly, the measuring unit 124 may include a voltage sensor configured to measure the cell voltage of each of the plurality of battery cells. In addition, the measuring unit 124 may further include a current sensor configured to measure the cell current of the plurality of battery cells.

The processor 126, as a main entity controlling the charging and discharging of the battery module 110, may be implemented as a central processing unit (CPU) or system on chip (SoC), may control a plurality of hardware or software components connected to the processor 126 by processing an operating system or application, and may perform various types of data processing and computations. In particular, in the present embodiment, the processor 126 may correspond to an analog front end (AFE) integrated circuit (IC) or a microcontroller unit (MCU) of a BMS that monitors the status of the battery, such as a voltage, current, temperature, and SOC of the battery module 110, and controls the charging or discharging of the battery module 110 based on the monitoring results.

The processor 126 may control charging and discharging of the battery module 110 based on the battery status data. For example, during the charging of the battery module 110, if the voltage of the battery module 110 reaches a predetermined reference charging threshold voltage, the processor 126 may terminate the charging of the battery module 110. During the discharging of the battery module 110, if the voltage of the battery module 110 reaches a predetermined reference discharging threshold voltage, the processor 126 may terminate the discharging of the battery module 110.

Meanwhile, even though the battery modules 110 have the same capacity at the time of shipment, an available voltage range for charging and discharging may vary depending on chemical properties, such as chemical structure and particle size. Accordingly, even if cell balancing is performed to match a voltage range of the battery module 110, capacity differences between the battery modules 110 may continuously occur, and capacity degradation of the battery module 110 may occur with continuous use. In particular, in the case of lithium iron phosphate batteries, the closer to a full charge (SOC 100%) and a full discharge (SOC 0%), the greater a polarization resistance. Thus, an actual usable voltage range becomes significantly narrower, resulting in a phenomenon in which the charge and discharge capacity of the battery becomes less than the chemically usable capacity. That is, due to the high polarization resistance of the battery module 110, an issue arises in which the capacity of the battery module 110 varies because of characteristics, such as a significant drop in voltage after charging is completed, a significant increase in voltage after discharging is completed, and changes in polarization and electrochemical internal resistance at the end of charging/discharging depending on the voltage at the start of the charging/discharging. In particular, in the case of lithium iron phosphate batteries, charging starts at a low voltage, and the polarization resistance at the end of charging increases and varies between the battery cells, resulting in capacity differences.

Accordingly, the present disclosure aims to maximize the capacity of the battery module 110 by applying a slightly more flexible charging/discharging threshold voltage compared to the conventional charging/discharging threshold voltage.

To this end, the processor 126 may increase the charging threshold voltage as the voltage at the start of charging is lower, thereby maximizing the charge capacity of the battery module 110. In addition, the processor 126 may decrease the discharging threshold voltage as the voltage at the start of discharging becomes higher, thereby maximizing the discharge capacity of the battery module 110.

At this time, the processor 126 may adjust the charging or discharging threshold voltage based on a difference in voltage between the battery cells and a current SOC of the battery module 110 at the start of charging or discharging of the battery module 110. Here, the charging threshold voltage may mean a voltage set to terminate charging, and the discharging threshold voltage may mean a voltage set to terminate discharging. The SOC of the battery module 110 may increase to 100% if the battery module 110 is fully charged, and may gradually decrease from 100% as the battery module 110 is discharged.

During the charging of the battery module 110, the processor 126 may terminate the charging of the battery module 110 if the voltage of the battery module 110, which is measured by the measuring unit 124, corresponds to (i.e., is equal to) the charging threshold voltage. During the discharging of the battery module 110, the processor 126 may terminate the discharging of the battery module 110 if the voltage of the battery module 110, which is measured by the measuring unit 124, corresponds to (i.e., is equal to) the discharging threshold voltage.

Hereinafter, operations of the processor 126 will be described in detail.

First, a method by which the processor 126 controls charging of the battery module 110 will be described.

A reference charging threshold voltage for terminating the charging is set in the battery module 110. However, during the charging of the battery module 110, polarization and electrochemical internal resistance at the end of charging vary depending on a voltage at the start of charging of each battery cell, which may result in differences in capacity among the battery cells.

To address this issue, a charging threshold voltage can be set adaptively based on a current SOC of the battery module 110 and cell voltages in the battery module 110, rather than using only the reference charging threshold voltage to charge the battery module 110. Here, the term "SOC" represents a current charged state of the battery module 110 as a percentage [%] and may have the same meaning as charge capacity, charge rate, or the like.

The processor 126 may adjust the charging threshold voltage based on a difference in cell voltage between the battery cells at the start of charging of the battery module 110 and the current SOC of the battery module 110. That is, at the start of charging of the battery module 110, the processor 126 may calculate a maximum voltage deviation of the battery module 110 based on the cell voltage of each battery cell, and set a first charging threshold voltage based on at least one of the reference charging threshold voltage, the maximum voltage deviation, and the current SOC. The charging threshold voltage needs to be set higher as a voltage at the start of charging becomes lower, and thus, the processor 126 may utilize the maximum voltage deviation and the current SOC of the battery module 110.

Specifically, the processor 126 may calculate the maximum voltage deviation of the battery module 110 based on the cell voltage of each battery cell. That is, the processor 126 may obtain a maximum cell voltage and a minimum cell voltage from among the cell voltages of the plurality of battery cells measured at the time charging starts. In addition, the processor 126 may calculate an average voltage of the cell voltages of the plurality of battery cells measured at the time charging starts. Thereafter, the processor 126 may compare each of the minimum cell voltage and the maximum cell voltage with the average voltage of the battery module 110 to calculate the maximum voltage deviation. For example, the processor 126 may calculate the larger of a difference between the average voltage and the minimum cell voltage, and a difference between the average voltage and the maximum cell voltage, as the maximum voltage deviation.

The processor 126 may calculate the current SOC at the time charging starts, or measure the current SOC through the measuring unit 124. At this time, the processor 126 may calculate the current SOC based on a cell voltage, a cell current, a temperature, or the like of each battery cell measured through the measuring unit 124. In calculating the current SOC, conventional methods of measuring charge capacity may be used, such as voltage measurement, current measurement, internal resistance calculation, and temperature measurement.

Once the maximum voltage deviation and the current SOC at the start of charging of the battery module 110 are calculated, the processor 126 may calculate the first charging threshold voltage using Equation 1 below,

[Equation 1]

First charging threshold voltage=reference charging threshold voltage+maximum voltage deviation*(100-current SOC%)

here, the reference charging threshold voltage may be a preset value.

Through Equation 1, it can be seen that the first charging threshold voltage has a higher value than the reference charging threshold voltage. In addition, since the first charging threshold voltage is calculated using the formula "100 - current SOC at the time charging starts," it can be seen that the lower the current SOC, the higher the value of the first charging threshold voltage.

Once the first charging threshold voltage is set, the processor 126 may charge the battery module 110 and determine whether there are any battery cells that have reached the first charging threshold voltage. That is, the processor 126 may determine whether the maximum cell voltage among the cell voltages of each battery cell, which are measured through the measuring unit 124, has reached the first charging threshold voltage.

If the maximum cell voltage of the battery module 110 reaches the first charging threshold voltage, the processor 126 may compare the minimum cell voltage among the cell voltages of each battery cell with the reference charging threshold voltage, and based on the comparison result, the processor 126 may terminate the charging or calibrate the first charging threshold voltage.

In order to terminate the charging of the battery module 110, the cell voltages of all battery cells in the battery module 110 should be greater than or equal to the reference charging threshold voltage. Accordingly, the processor 126 may determine whether the minimum cell voltage of the battery module 110 is greater than or equal to the reference charging threshold voltage even if the maximum cell voltage of the battery module 110 reaches the first charging threshold voltage.

If the maximum cell voltage of the battery module 110 reaches the first charging threshold voltage and the minimum cell voltage of the battery module 110 is greater than or equal to the reference charging threshold voltage, the cell voltages of all battery cells in the battery module 110 are greater than or equal to the reference charging threshold voltage, and thus, the processor 126 can terminate the charging of the battery module 110.

If the maximum cell voltage of the battery module 110 reaches the first charging threshold voltage, but the minimum cell voltage of the battery module 110 is not greater than or equal to the reference charging threshold voltage, the battery module 110 should be charged further. The first charging threshold voltage should be calibrated to a higher value to continue charging the battery module 110.

Accordingly, the processor 126 may increase the first charging threshold voltage to calibrate the first charging threshold voltage to a second charging threshold voltage. At this point, the processor 126 may calculate the second charging threshold voltage by increasing the first charging threshold voltage by a difference between the average voltage of the cell voltages of the plurality of battery cells and the minimum cell voltage. That is, the processor 126 may calculate the second charging threshold voltage using Equation 2 below,

[Equation 2]

$$\text{Second charging threshold voltage} = \text{first charging threshold voltage} + (\text{average voltage} - \text{minimum cell voltage})$$

here, the average voltage and the minimum cell voltage may refer to an average voltage and a minimum cell voltage at the time that the maximum cell voltage of the battery module 110 reaches the first charging threshold voltage.

Once the second charging threshold voltage is set, the processor 126 may continue charging the battery module 110, and if the maximum cell voltage among the cell voltages of the plurality of battery cells reaches the second charging threshold voltage or if the minimum cell voltage among the cell voltages reaches the reference charging threshold voltage, the processor 126 may terminate the charging of the battery module 110.

As described above, the processor 126 may control the charging of the battery module 110 by setting the charging threshold voltage to be higher as the voltage (or SOC) at the start of charging is lower, thereby increasing the available voltage range and increasing the usable capacity of the battery module 110.

A method of controlling the charging of the battery module 110 will be described, for example, if the reference charging threshold voltage is 3.65 V, the SOC is 0%, the minimum cell voltage is 2.75 V, the average voltage is 2.81 V, and the maximum cell voltage is 2.84 V. In that case, the processor 126 may set the first charging threshold voltage to 3.71 V instead of 3.65 V, using the formula "[3.65+0.06x(100-0%)]=3.71 V." During the charging of the battery module 110, if the maximum cell voltage in the battery module 110 reaches 3.71 V and the minimum cell voltage is greater than or equal to the reference charging threshold voltage of 3.65 V, the processor 126 may terminate the charging of the battery module 110. During the charging of the battery module 110, if the maximum cell voltage in the battery module 110 reaches 3.71 V, but the minimum cell voltage is not greater than or equal to the reference charging threshold voltage of 3.65 V, the processor 126 may set the second charging threshold voltage by increasing the first charging threshold voltage of 3.71 V by a difference between the average voltage of the battery module 110 and the minimum cell voltage. For example, if the minimum cell voltage is 3.64 V and the average voltage is 3.67 V at the time the first charging threshold voltage is reached, the processor 126 may set the second charging threshold voltage to "[3.71+(3.67-3.64)]=3.74 V."

In addition, a method of controlling the charging of the battery module 110 will be described, for example, if the reference charging threshold voltage is 3.65 V, the SOC is 60%, the minimum cell voltage is 3.25 V, the average voltage is 3.29 V, and the maximum cell voltage is 3.36 V. In this case, the processor 126 may set the first charging threshold voltage to 3.678V instead of 3.65V, using the formula "[3.65+0.07x(100-60%)]=3.678V." During the charging of the battery module 110, if the maximum cell voltage in the battery module 110 reaches 3.678 V and the minimum cell voltage is greater than or equal to the reference charging threshold voltage of 3.65 V, the processor 126 may terminate the charging of the battery module 110. During the charging of the battery module 110, if the maximum cell voltage in the battery module 110 reaches 3.678 V, but the minimum cell voltage is not greater than or equal to the reference charging threshold voltage of 3.65 V, the processor 126 may set the second charging threshold voltage by increasing the first charging threshold voltage of 3.678 V by a difference between the average voltage of the battery module 110 and the minimum cell voltage. For example, if the minimum cell voltage is 3.63 V and the average voltage is 3.65 V at the time the first charging threshold voltage is reached, the processor 126 may set the second charging threshold voltage to "[3.678+(3.65-3.63)]= 3.698 V."

Next, a method by which the processor 126 controls the discharging of the battery module 110 will be described.

A reference discharging threshold voltage for terminating the discharging is set in the battery module 110. However, during the discharging of the battery module 110, polarization and electrochemical internal resistance at the end of discharging vary depending on a voltage at the time each battery cell starts discharging, which may result in differences in capacity of each battery cell.

To address this issue, in the present disclosure, a discharging threshold voltage can be set adaptively based on a current SOC of the battery module 110 and cell voltages in the battery module 110, rather than using only the reference discharging threshold voltage to discharge the battery module 110.

The processor 126 may adjust the discharging threshold voltage based on a difference in cell voltage between the battery cells at the start of discharging of the battery module 110 and the current SOC of the battery module 110. That is, at the start of discharging of the battery module 110, the processor 126 may calculate a maximum voltage deviation of the battery module 110 based on the cell voltage of each battery cell, and set a first discharging threshold voltage based on at least one of the reference discharging threshold voltage, the maximum voltage deviation, and the current SOC. The discharging threshold voltage needs to be set lower as a voltage at the start of discharging is higher, and thus, the processor 126 may utilize the maximum voltage deviation and the current SOC of the battery module 110.

Specifically, the processor 126 may calculate the maximum voltage deviation of the battery module 110 based on the cell voltage of each battery cell. That is, the processor 126 may obtain a maximum cell voltage and a minimum cell voltage from among the cell voltages of the plurality of battery cells measured at the time discharging starts. In addition, the processor 126 may calculate an average voltage of the cell voltages of the plurality of battery cells measured at the time discharging starts. Thereafter, the processor 126 may compare each of the minimum cell voltage and the maximum cell voltage with the average voltage of the battery module 110 to calculate the maximum voltage deviation. For example, the processor 126 may calculate the larger of a difference between the average voltage and the minimum cell voltage, and a difference between the average voltage and the maximum cell voltage, as the maximum voltage deviation.

The processor 126 may calculate the current SOC at the time discharging starts or measure the current SOC through the measuring unit 124. At this time, the processor 126 may calculate the current SOC based on a cell voltage, a cell current, a temperature, or the like of each battery cell measured through the measuring unit 124. In calculating the current SOC, conventional methods of measuring charge capacity may be used, such as voltage measurement, current measurement, internal resistance calculation, and temperature measurement.

Once the maximum voltage deviation and the current SOC at the start of discharging of the battery module 110 are calculated, the processor 126 may calculate the first discharging threshold voltage using Equation 3 below,

[Equation 3]

First discharging threshold voltage=reference discharging threshold voltage+maximum voltage deviation*(100-current SOC%)

here, the reference discharging threshold voltage may be a preset value.

Through Equation 3, it can be seen that the first discharging threshold voltage has a lower value than the reference discharging threshold voltage. In addition, since the first charging threshold voltage is calculated by performing a difference calculation between the current SOC at the time charging starts and the reference discharging threshold voltage, it can be seen that the higher the current SOC, the lower the value of the first charging threshold voltage.

Once the first discharging threshold voltage is set, the processor 126 may discharge the battery module 110 and determine whether there are any battery cells that have reached the first discharging threshold voltage. That is, the processor 126 may determine whether the minimum cell voltage among the cell voltages of each battery cell, which are measured through the measuring unit 124, has reached the first discharging threshold voltage.

If the minimum cell voltage of the battery module 110 reaches the first discharging threshold voltage, the processor 126 may compare the maximum cell voltage among the cell voltages of each battery cell with the reference discharging threshold voltage, and based on the comparison result, the processor 126 may terminate the discharging or calibrate the first discharging threshold voltage.

In order to terminate the discharging of the battery module 110, the cell voltages of all battery cells in the battery module 110 should be less than or equal to the reference discharging threshold voltage. Accordingly, the processor 126 may determine whether the maximum cell voltage is less than or equal to the reference discharging threshold voltage even if the minimum cell voltage of the battery module 110 reaches the first discharging threshold voltage.

If the minimum cell voltage of the battery module 110 reaches the first discharging threshold voltage and the maximum cell voltage of the battery module 110 is less than or equal to the reference discharging threshold voltage, the cell voltages of all battery cells in the battery module 110 are less than or equal to the reference discharging threshold voltage, and thus, the processor 126 can terminate the discharging of the battery module 110.

If the minimum cell voltage of the battery module 110 reaches the first discharging threshold voltage, but the maximum cell voltage is not less than or equal to the reference discharging threshold voltage, the battery module 110 should be discharged further. The first discharging threshold voltage should be calibrated to a lower value to continue discharging the battery module 110.

Accordingly, the processor 126 may decrease the first discharging threshold voltage to calibrate the first discharging threshold voltage to a second discharging threshold voltage. At this point, the processor 126 may calculate the second discharging threshold voltage by decreasing the first discharging threshold voltage by a difference between the average voltage of the cell voltages of the plurality of battery cells and the maximum cell voltage. That is, the processor 126 may calculate the second discharging threshold voltage using Equation 4 below,

[Equation 4]

Second discharging threshold voltage=first discharging threshold voltage-

(maximum cell voltage-average voltage)

here, the average voltage and the maximum cell voltage may refer to an average voltage and a maximum cell voltage at the time if the minimum cell voltage of the battery module 110 reaches the first discharging threshold voltage.

Once the second discharging threshold voltage is set, the processor 126 may continue discharging the battery module 110, and if the minimum cell voltage among the cell voltages of the plurality of battery cells reaches the second discharging threshold voltage or if the maximum cell voltage among the cell voltages reaches the reference discharging threshold voltage, the processor 126 may terminate the discharging of the battery module 110.

As described above, the processor 126 may control the discharging of the battery module 110 by setting the discharging threshold voltage to be lower as the voltage (or SOC) at the start of discharging is higher, thereby increasing the available voltage range and increasing the usable capacity of the battery module 110.

A method of controlling the discharging of the battery module 110 will be described, for example, if the reference discharging threshold voltage is 2.75 V, the SOC is 100%, the minimum cell voltage is 3.60 V, the average voltage is 3.61 V, and the maximum cell voltage is 3.65 V. In this case, the processor 126 may set the first discharging threshold voltage to 2.71 V instead of 2.75 V using the formula "[2.75-0.04x(100%)]=2.71 V." During the discharging of the battery module 110, if the minimum cell voltage in the battery module 110 reaches 2.71 V and the maximum cell voltage is less than or equal to the reference discharging threshold voltage of 2.75 V, the processor 126 may terminate the discharging of the battery module 110. During the discharging of the battery module 110, if the minimum cell voltage in the battery module 110 reaches 2.71 V, but the maximum cell voltage is not less than or equal to the reference discharging threshold voltage of 2.75 V, the processor 126 may set the second discharging threshold voltage by decreasing the first discharging threshold voltage of 2.71 V by a difference between the average voltage of the battery module 110 and the maximum cell voltage. For example, if the maximum cell voltage is 2.77 V and the average voltage is 2.75 V at the time the first discharging threshold voltage is reached, the processor 126 may set the second discharging threshold voltage to "[2.71-(2.77-2.75)]= 2.69 V."

In addition, a method of controlling the discharging of the battery module 110 will be described, for example, if the reference discharging threshold voltage is 2.75 V, the SOC is 60%, the minimum cell voltage is 3.25 V, the average voltage is 3.29 V, and the maximum cell voltage is 3.35 V. In this case, the processor 126 may set the first discharging threshold voltage to 2.714 V instead of 2.75 V, using the formula "[2.75-0.06x(60%)]=2.714 V." During the discharging of the battery module 110, if the minimum cell voltage in the battery module 110 reaches 2.714 V and the maximum cell voltage is less than or equal to the reference discharging threshold voltage of 2.75 V, the processor 126 may terminate the discharging of the battery module 110. During the discharging of the battery module 110, if the minimum cell voltage in the battery module 110 reaches 2.714 V, but the maximum cell voltage is not less than or equal to the reference discharging threshold voltage of 2.75 V, the processor 126 may set the second discharging threshold voltage by decreasing the first discharging threshold voltage of 2.714 V by a difference between the average voltage of the battery module 110 and the maximum cell voltage. For example, if the maximum cell voltage is 2.77 V and the average voltage is 2.75 V at the time the first discharging threshold voltage is reached, the processor 126 may set the second discharging threshold voltage to "[2.714-(2.77-2.75)]= 2.694 V."

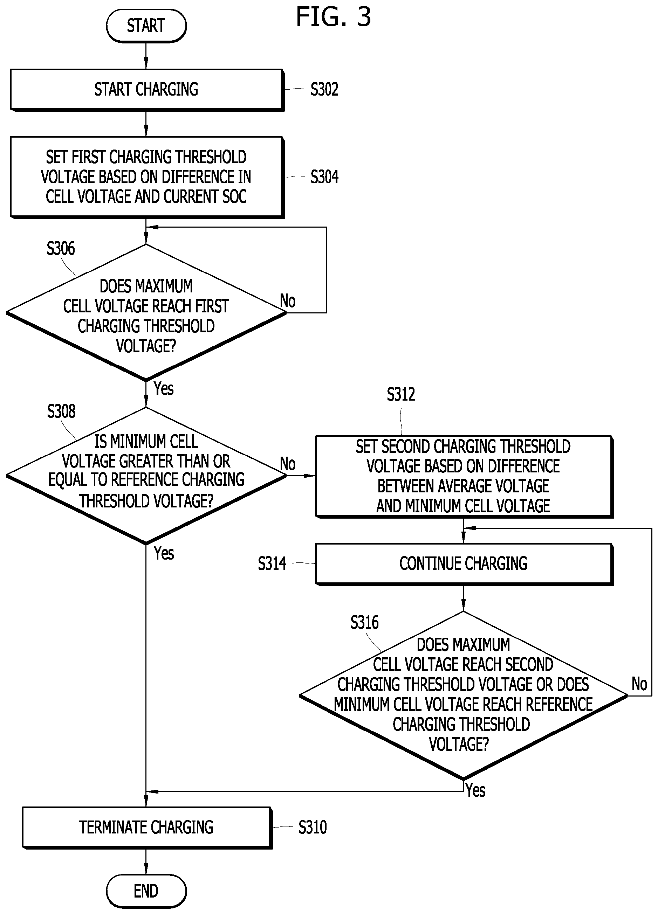

FIG. 3 is a flowchart for describing a method of controlling charging of the battery module according to one or more embodiments of the present disclosure.

Referring to FIG. 3, if the battery module 110 starts charging (S302), the processor 126 sets a first charging threshold voltage based on a difference in cell voltage between the plurality of battery cells and a current SOC of the battery module 110 (S304).

The processor 126 may calculate a maximum voltage deviation of the battery module 110 based on a cell voltage of each battery cell. That is, the processor 126 may obtain a maximum cell voltage and a minimum cell voltage from among the cell voltages of the plurality of battery cells measured at the time charging starts. In addition, the processor 126 may calculate an average voltage of the cell voltages of the plurality of battery cells, which are measured at the time charging starts. Thereafter, the processor 126 may compare each of the minimum cell voltage and the maximum cell voltage with the average voltage of the battery module 110 to calculate the maximum voltage deviation. The processor 126 may calculate the current SOC at the time charging starts or measure the current SOC through the measuring unit 124.

Once the maximum voltage deviation and the current SOC at the start of charging of the battery module 110 are calculated, the processor 126 may use the reference charging threshold voltage, the maximum voltage deviation, and the current SOC to calculate the first charging threshold voltage.

After operation S304 is performed, the processor 126 determines whether the maximum cell voltage of the battery module 110 has reached the first charging threshold voltage (S306). That is, the processor 126 may determine whether the maximum cell voltage among the cell voltages of each battery cell, which are measured through the measuring unit 124 during the charging of the battery module 110, has reached the first charging threshold voltage.

If, as a result of the determination in operation S306, the maximum cell voltage of the battery module 110 reaches the first charging threshold voltage, the processor 126 determines whether the minimum cell voltage of the battery module 110 is greater than or equal to the reference charging threshold voltage (S308). In order to terminate the charging of the battery module 110, the cell voltages of all battery cells in the battery module 110 should be greater than or equal to the reference charging threshold voltage. Accordingly, the processor 126 may determine whether the minimum cell voltage of the battery module 110 is greater than or equal to the reference charging threshold voltage even if the maximum cell voltage of the battery module 110 reaches the first charging threshold voltage.

If, as a result of the determination in operation S308, the minimum cell voltage of the battery module 110 is greater than or equal to the reference charging threshold voltage, the processor 126 terminates the charging of the battery module 110 (S310).

If, as the result of the determination in operation S308, the minimum cell voltage of the battery module 110 is not greater than or equal to the reference charging threshold voltage, the processor 126 sets a second charging threshold voltage based on a difference between the average voltage of the battery module 110 and the minimum cell voltage at the time the maximum cell voltage of the battery module 110 reaches the first charging threshold voltage (S312), and continues charging the battery module 110 (S314).

If the maximum cell voltage of the battery module 110 reaches the first charging threshold voltage, but the minimum cell voltage of the battery module 110 is not greater than or equal to the reference charging threshold voltage, the battery module 110 should be charged further. The first charging threshold voltage should be calibrated to a higher value to continue charging the battery module 110. Accordingly, the processor 126 may increase the first charging threshold voltage to calibrate the first charging threshold voltage to the second charging threshold voltage. At this point, the processor 126 may calculate the second charging threshold voltage by increasing the first charging threshold voltage by a difference between the average voltage of the cell voltages of the plurality of battery cells and the minimum cell voltage.

While performing operation S314, if the maximum cell voltage reaches the second charging threshold voltage or the minimum cell voltage reaches the reference charging threshold voltage (S316), the processor 126 terminates the charging of the battery module 110.

While performing operation S314, if the maximum cell voltage does not reach the second charging threshold voltage or the minimum cell voltage does not reach the reference charging threshold voltage, the processor 126 continues charging the battery module 110.

As described above, the processor 126 may control the charging of the battery module 110 by setting the charging threshold voltage to be higher as the voltage (or SOC) at the start of charging is lower, thereby increasing the available voltage range and increasing the usable capacity of the battery module 110.

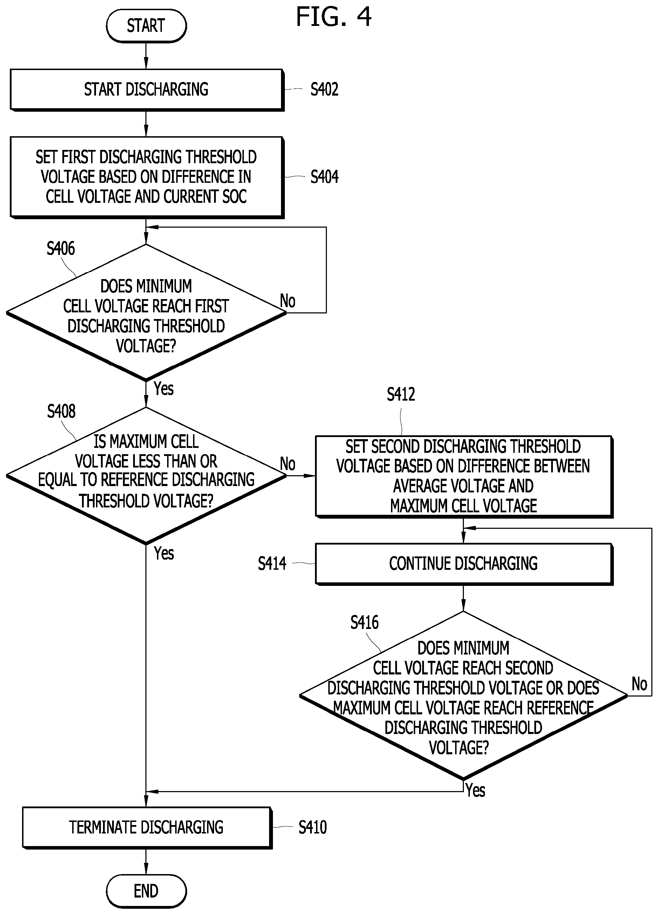

FIG. 4 is a flowchart for describing a method of controlling discharging of the battery module according to one or more embodiments of the present disclosure.

Referring to FIG. 4, if the battery module 110 starts discharging (S402), the processor 126 sets a first discharging threshold voltage based on a difference in cell voltage between the plurality of battery cells and a current SOC of the battery module 110 (S404).

The processor 126 may calculate a maximum voltage deviation of the battery module 110 based on a cell voltage of each battery cell. That is, the processor 126 may obtain a maximum cell voltage and a minimum cell voltage from among the cell voltages of the plurality of battery cells measured at the time discharging starts. In addition, the processor 126 may calculate an average voltage of the cell voltages of the plurality of battery cells measured at the time discharging starts. Thereafter, the processor 126 may compare each of the minimum cell voltage and the maximum cell voltage with the average voltage of the battery module 110 to calculate the maximum voltage deviation. The processor 126 may calculate the current SOC at the time discharging starts or measure the current SOC through the measuring unit 124.

Once the maximum voltage deviation and the current SOC at the start of discharging of the battery module 110 are calculated, the processor 126 may use the reference discharging threshold voltage, the maximum voltage deviation, and the current SOC to calculate the first discharging threshold voltage.

After operation S404 is performed, the processor 126 determines whether the minimum cell voltage of the battery module 110 has reached the first discharging threshold voltage (S406). That is, the processor 126 may determine whether the minimum cell voltage among the cell voltages of each battery cell, which are measured through the measuring unit 124, has reached the first discharging threshold voltage.

If, as a result of the determination in operation S406, the minimum cell voltage of the battery module 110 reaches the first discharging threshold voltage, the processor 126 determines whether the maximum cell voltage of the battery module 110 is less than or equal to the reference discharging threshold voltage (S408). In order to terminate the discharging of the battery module 110, the cell voltages of all battery cells in the battery module 110 should be less than or equal to the reference discharging threshold voltage. Accordingly, the processor 126 may determine whether the maximum cell voltage is less than or equal to the reference discharging threshold voltage even if the minimum cell voltage of the battery module 110 reaches the first discharging threshold voltage.

If, as a result of the determination in operation S408, the maximum cell voltage of the battery module 110 is less than or equal to the reference discharging threshold voltage, the processor 126 terminates the discharging of the battery module 110 (S410).

If, as the result of the determination in operation S408, the maximum cell voltage of the battery module 110 is not greater than or equal to the reference discharging threshold voltage, the processor 126 sets a second discharging threshold voltage based on a difference between the average voltage of the battery module 110 and the maximum cell voltage at the time the minimum cell voltage of the battery module 110 reaches the first discharging threshold voltage (S412), and continues discharging the battery module 110 (S414).

If the minimum cell voltage of the battery module 110 reaches the first discharging threshold voltage, but the maximum cell voltage is not less than or equal to the reference discharging threshold voltage, the battery module 110 should be discharged further. The first discharging threshold voltage should be calibrated to a lower value to continue discharging the battery module 110. Accordingly, the processor 126 may decrease the first discharging threshold voltage to calibrate the first discharging threshold voltage to the second discharging threshold voltage. At this point, the processor 126 may calculate the second discharging threshold voltage by decreasing the first discharging threshold voltage by a difference between the average voltage of the cell voltages of the plurality of battery cells and the maximum cell voltage.

While performing operation S414, if the minimum cell voltage reaches the second discharging threshold voltage or the maximum cell voltage reaches the reference discharging threshold voltage (S416), the processor 126 terminates the discharging of the battery module 110.

While performing operation S414, if the minimum cell voltage does not reach the second discharging threshold voltage or the maximum cell voltage does not reach the reference discharging threshold voltage, the processor 126 continues discharging the battery module 110.

As described above, the processor 126 may control the discharging of the battery module 110 by setting the discharging threshold voltage to be lower as the voltage (or SOC) at the start of discharging is higher, thereby increasing the available voltage range and increasing the usable capacity of the battery module 110.

As described above, according to the present disclosure, the capacity of the battery module may be increased by adaptively setting a charging/discharging threshold voltage according to a cell voltage and a state of charge (SOC) at the start of charging/discharging of the battery module.

The embodiments described herein may be implemented, for example, as a method or process, a device, a software program, a data stream, or a signal. Although discussed in the context of a single type of implementation (for example, discussed only as a method), features discussed herein may also be implemented in other forms (for example, a

**EP 4 708 618 A1**

device or a program). The device may be implemented by suitable hardware, software, firmware, and the like. The method may be implemented on a device, such as a processor that generally refers to a processing device including a computer, a microprocessor, an integrated circuit, a programmable logic device, etc. The processor includes a communication device such as a computer, a cell phone, a personal digital assistant (PDA), and other devices that facilitate communication of information between the device and end-users.

According to the present disclosure, the capacity of a battery module can be increased by adaptively setting a charging/discharging threshold voltage according to a cell voltage and a state of charge (SOC) at the start of charging/discharging of the battery module.

However, effects that can be achieved through the present disclosure are not limited to the above-described effects and other effects that are not described may be clearly understood by those skilled in the art from the detailed descriptions.

Although the present disclosure has been described with reference to embodiments and drawings illustrating aspects thereof, the present disclosure is not limited thereto. Various modifications and variations can be made by a person skilled in the art to which the present disclosure belongs within the scope of the technical information of the present disclosure and the claims and their equivalents, below.

Example embodiments have been disclosed herein, and although specific terms are employed, they are used and are to be interpreted in a generic and descriptive sense only and not for purpose of limitation. **In** some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of ordinary skill in the art that various changes in form and details may be made without departing from the scope of the present invention as set forth in the following claims.

Embodiments are set out in the following clauses:

Clause 1. A battery management apparatus comprising:

a measuring unit configured to measure a cell voltage of each of a plurality of battery cells in a battery module; and a processor configured to adjust a charging threshold voltage or a discharging threshold voltage based on a difference in cell voltage between the plurality of battery cells and a current state of charge (SOC) of the battery module when charging or discharging the battery module.

Clause 2. The battery management apparatus of clause 1, wherein the processor is configured to calculate a maximum voltage deviation of the battery module based on the cell voltage of each of the plurality of battery cells at a start of charging of the battery module, and set a first charging threshold voltage based on at least one of a predetermined reference charging threshold voltage, the maximum voltage deviation, and the current SOC.

Clause 3. The battery management apparatus of clause 2, wherein during the charging of the battery module, when a maximum cell voltage among the cell voltages of the plurality of battery cells reaches the first charging threshold voltage, the processor is configured to compare a minimum cell voltage among the cell voltages with the reference charging threshold voltage and terminate the charging or calibrate the first charging threshold voltage based on a comparison result.

Clause 4. The battery management apparatus of clause 3, wherein when the minimum cell voltage is greater than or equal to the reference charging threshold voltage, the processor is configured to terminate the charging of the battery module.

Clause 5. The battery management apparatus of clause 3 or clause 4, wherein when the minimum cell voltage is not greater than or equal to the reference charging threshold voltage, the processor is configured to increase the first charging threshold voltage to calibrate the first charging threshold voltage to a second charging threshold voltage, and to continue charging the battery module.

Clause 6. The battery management apparatus of clause 5, wherein the second charging threshold voltage is a value that is increased from the first charging threshold voltage by a difference between an average voltage of the cell voltages of the plurality of battery cells and the minimum cell voltage.

Clause 7. The battery management apparatus of clause 5 or clause 6, wherein during the charging of the battery module, when the maximum cell voltage among the cell voltages of the plurality of battery cells reaches the second charging threshold voltage, or when the minimum cell voltage among the cell voltages reaches the reference charging

**14**

threshold voltage, the processor is configured to terminate the charging of the battery module.

Clause 8. The battery management apparatus of any preceding clause, wherein the processor is configured to calculate a maximum voltage deviation of the battery module based on the cell voltage of each of the plurality of battery cells at a start of discharging of the battery module, and set a first discharging threshold voltage based on at least one of a predetermined reference discharging threshold voltage, the maximum voltage deviation, and the current SOC.

Clause 9. The battery management apparatus of clause 8, wherein during the discharging of the battery module, when a minimum cell voltage among the cell voltages of the plurality of battery cells reaches the first discharging threshold voltage, the processor is configured to compare a maximum cell voltage among the cell voltages with the reference discharging threshold voltage and terminate the discharging or calibrates the first discharging threshold voltage based on a comparison result.

Clause 10. The battery management apparatus of clause 9, wherein when the minimum cell voltage is less than or equal to the reference discharging threshold voltage, the processor is configured to terminate the discharging of the battery module.

Clause 11. The battery management apparatus of clause 9 or clause 10, wherein, when the maximum cell voltage is not less than or equal to the reference discharging threshold voltage, the processor is configured to decrease the first discharging threshold voltage to calibrate the first discharging threshold voltage to a second discharging threshold voltage, and continues discharging the battery module.

Clause 12. The battery management apparatus of clause 11, wherein the second discharging threshold voltage is a value that is decreased from the first charging threshold voltage by a difference between an average voltage of the cell voltages of the plurality of battery cells and the maximum cell voltage.

Clause 13. The battery management apparatus of clause 11 or clause 12, wherein during the discharging of the battery module, when the minimum cell voltage among the cell voltages of the plurality of battery cells reaches the second discharging threshold voltage, or when the maximum cell voltage among the cell voltages reaches the reference discharging threshold voltage, the processor terminates the discharging of the battery module.

Clause 14. A method of controlling charging using a battery management apparatus, the method comprising:

setting, by a processor, a first charging threshold voltage based on a difference in cell voltage between a plurality of battery cells and a current state of charge (SOC) of a battery module including the plurality of battery cells at a start of charging of the battery module;
comparing, by the processor, a minimum cell voltage among cell voltages of the plurality of battery cells with a predetermined reference charging threshold voltage, when a maximum cell voltage among the cell voltages reaches the first charging threshold voltage during the charging of the battery module; and
terminating, by the processor, the charging of the battery module when the minimum cell voltage is greater than or equal to the reference charging threshold voltage.

Clause 15. The method of clause 14, wherein in the setting of the first charging threshold voltage,
the processor calculates a maximum voltage deviation of the battery module based on the cell voltage of each of the plurality of battery cells, and sets the first charging threshold voltage based on at least one of the reference charging threshold voltage, the maximum voltage deviation, and the current SOC.

Clause 16. The method of clause 14 or clause 15, further comprising:

setting, by the processor, a second charging threshold voltage by increasing the first charging threshold voltage when the minimum cell voltage is not greater than or equal to the reference charging threshold voltage; and
terminating, by the processor, the charging of the battery module when the maximum cell voltage among the cell voltages of the plurality of battery cells reaches the second charging threshold voltage or when the minimum cell voltage among the cell voltages reaches the reference charging threshold voltage, during the charging of the battery module.

Clause 17. The method of clause 16, wherein in the setting of the second charging threshold voltage,
the processor sets the second charging threshold voltage by increasing the first charging threshold voltage by a difference between an average voltage of the cell voltages of the plurality of battery cells and the minimum cell voltage.

Clause 18. A method of controlling discharging using a battery management apparatus, the method comprising:

setting, by a processor, a first discharging threshold voltage based on a difference in cell voltage between a plurality of battery cells and a current state of charge (SOC) of a battery module including the plurality of battery cells at a start of discharging of the battery module;
comparing, by the processor, a maximum cell voltage among cell voltages of the plurality of battery cells with a reference discharging threshold voltage, when a minimum cell voltage among the cell voltages reaches the first discharging threshold voltage during the discharging of the battery module; and
terminating, by the processor, the discharging of the battery module when the maximum cell voltage is less than or equal to the reference discharging threshold voltage.

Clause 19. The method of clause 18, further comprising:

setting, by the processor, a second discharging threshold voltage by increasing the first discharging threshold voltage when the maximum cell voltage is not less than or equal to the reference discharging threshold voltage; and
terminating, by the processor, the discharging of the battery module when the minimum cell voltage among the cell voltages of the plurality of battery cells reaches the second discharging threshold voltage or when the minimum cell voltage among the cell voltages reaches the reference discharging threshold voltage, during the discharging of the battery module.

Clause 20. The method of clause 19, wherein in the setting of the second discharging threshold voltage,
the processor sets the second discharging threshold voltage by increasing the first discharging threshold voltage by a difference between an average voltage of the cell voltages of the plurality of battery cells and the maximum cell voltage.

**Claims**

1. A battery management apparatus, comprising:

   a measuring unit including at least one sensor, the measuring unit configured to measure a cell voltage of each of a plurality of battery cells in a battery module; and
   a processor configured to adjust a charging threshold voltage or a discharging threshold voltage based on a difference in cell voltage between the plurality of battery cells and a current state of charge (SOC) of the battery module if charging or discharging the battery module.

2. The battery management apparatus as claimed in claim 1, wherein the processor is further configured to:

   calculate a maximum voltage deviation of the battery module based on the cell voltage of each of the plurality of battery cells at a start of charging of the battery module, and
   set a first charging threshold voltage based on at least one of a predetermined reference charging threshold voltage, the maximum voltage deviation, and the current SOC.

3. The battery management apparatus as claimed in claim 2, wherein the processor is further configured to compare a minimum cell voltage among all cell voltages with the predetermined reference charging threshold voltage, and terminate the charging or calibrate the first charging threshold voltage based on a comparison result during the charging of the battery module, if a maximum cell voltage among all cell voltages of the plurality of battery cells reaches the first charging threshold voltage.

4. The battery management apparatus as claimed in claim 3, wherein the processor is further configured to terminate the charging of the battery module if the minimum cell voltage is greater than or equal to the predetermined reference charging threshold voltage.

5. The battery management apparatus as claimed in claim 3 or claim 4, wherein the processor is further configured to increase the first charging threshold voltage to calibrate the first charging threshold voltage to a second charging threshold voltage, and continue charging the battery module if the minimum cell voltage is less than or equal to the predetermined reference charging threshold.

6. The battery management apparatus as claimed in any preceding claim, wherein the processor is further configured to:

   calculate a maximum voltage deviation of the battery module based on the cell voltage of each of the plurality of battery cells at a start of discharging of the battery module, and
   set a first discharging threshold voltage based on at least one of a predetermined reference discharging threshold voltage, the maximum voltage deviation, and the current SOC.

7. The battery management apparatus as claimed in claim 6, wherein during the discharging of the battery module, if a minimum cell voltage among all cell voltages of the plurality of battery cells reaches the first discharging threshold voltage, the processor is configured to compare a maximum cell voltage among all cell voltages with the reference discharging threshold voltage and terminate the discharging or calibrates the first discharging threshold voltage based on a comparison result.

8. The battery management apparatus as claimed in claim 7, wherein, if the maximum cell voltage is not less than or equal to the reference discharging threshold voltage, the processor may be configured to decrease the first discharging threshold voltage to calibrate the first discharging threshold voltage to a second discharging threshold voltage, and continue discharging the battery module.

9. A method of controlling charging using a battery management apparatus, the method comprising:

   setting, by a processor, a first charging threshold voltage based on a difference in cell voltage between a plurality of battery cells and a current state of charge (SOC) of a battery module including the plurality of battery cells at a start of charging of the battery module;
   comparing, by the processor, a minimum cell voltage among cell voltages of the plurality of battery cells with a predetermined reference charging threshold voltage, if a maximum cell voltage among all cell voltages reaches the first charging threshold voltage during the charging of the battery module; and

   terminating, by the processor, the charging of the battery module if the minimum cell voltage is greater than or equal to the predetermined reference charging threshold voltage.

10. The method as claimed in claim 9, wherein in the setting of the first charging threshold voltage, the processor calculates a maximum voltage deviation of the battery module based on a cell voltage of each of the plurality of battery cells, and sets the first charging threshold voltage based on at least one of the predetermined reference charging threshold voltage, the maximum voltage deviation, and the current SOC.

11. The method as claimed in claim 9 or claim 10, further comprising:

    setting, by the processor, a second charging threshold voltage by increasing the first charging threshold voltage if the minimum cell voltage is not greater than or equal to the predetermined reference charging threshold voltage; and
    terminating, by the processor, the charging of the battery module if the maximum cell voltage among all cell voltages of the plurality of battery cells reaches the second charging threshold voltage or if the minimum cell voltage among all cell voltages reaches the predetermined reference charging threshold voltage, during the charging of the battery module.

12. The method as claimed in claim 11, wherein in the setting of the second charging threshold voltage, the processor sets the second charging threshold voltage by increasing the first charging threshold voltage by a difference between an average voltage of all cell voltages of the plurality of battery cells and the minimum cell voltage.

13. A method of controlling discharging using a battery management apparatus, the method comprising:

    setting, by a processor, a first discharging threshold voltage based on a difference in cell voltage between a plurality of battery cells and a current state of charge (SOC) of a battery module including the plurality of battery cells at a start of discharging of the battery module;
    comparing, by the processor, a maximum cell voltage among cell voltages of the plurality of battery cells with a reference discharging threshold voltage, if a minimum cell voltage among all cell voltages reaches the first discharging threshold voltage during the discharging of the battery module; and

terminating, by the processor, the discharging of the battery module if the maximum cell voltage is less than or equal to the reference discharging threshold voltage.

14. The method as claimed in claim 13, further comprising:

setting, by the processor, a second discharging threshold voltage by increasing the first discharging threshold voltage if the maximum cell voltage is not less than or equal to the reference discharging threshold voltage; and

terminating, by the processor, the discharging of the battery module if the minimum cell voltage among all cell voltages of the plurality of battery cells reaches the second discharging threshold voltage or if the minimum cell voltage among all cell voltages reaches the reference discharging threshold voltage, during the discharging of the battery module.

15. The method as claimed in claim 14, wherein the processor is further configured to set the second discharging threshold voltage by increasing the first discharging threshold voltage by a difference between an average voltage of all cell voltages of the plurality of battery cells and the maximum cell voltage.

# FIG. 1

# FIG. 2

FIG. 3

```
                    ( START )
                        │
                        ▼
        ┌─────────────────────────────┐
        │        START CHARGING       │──── S302
        └─────────────────────────────┘
                        │
                        ▼
        ┌─────────────────────────────┐
        │  SET FIRST CHARGING THRESHOLD│
        │  VOLTAGE BASED ON DIFFERENCE IN│──── S304
        │  CELL VOLTAGE AND CURRENT SOC │
        └─────────────────────────────┘
                        │
                        ▼
S306              ◇───────────◇
            DOES MAXIMUM
       CELL VOLTAGE REACH FIRST        No
          CHARGING THRESHOLD  ────────────────┐
              VOLTAGE?                         │
                   │ Yes                       │
                   ▼                           │
S308                                  S312      │
       IS MINIMUM CELL         ┌─────────────────────────────┐
   VOLTAGE GREATER THAN OR  No  │  SET SECOND CHARGING THRESHOLD│
   EQUAL TO REFERENCE CHARGING ─│  VOLTAGE BASED ON DIFFERENCE │
      THRESHOLD VOLTAGE?         │  BETWEEN AVERAGE VOLTAGE     │
              │                  │  AND MINIMUM CELL VOLTAGE    │
              │ Yes              └─────────────────────────────┘
              │                             │
              │                             ▼
              │           S314 ──┌─────────────────────────────┐
              │                  │      CONTINUE CHARGING      │
              │                  └─────────────────────────────┘
              │                             │
              │                             ▼
              │        S316          ◇───────────────◇
              │                  DOES MAXIMUM
              │             CELL VOLTAGE REACH SECOND
              │         CHARGING THRESHOLD VOLTAGE OR DOES  No
              │        MINIMUM CELL VOLTAGE REACH REFERENCE ──┐
              │              CHARGING THRESHOLD               │
              │                  VOLTAGE?                     │
              │                      │ Yes                    │
              ▼                      │                        
        ┌─────────────────────────────┐
        │      TERMINATE CHARGING      │──── S310
        └─────────────────────────────┘
                    │
                    ▼
                 ( END )
```

FIG. 4

```
                    ( START )
                       │
                       ▼
        ┌──────────────────────────────┐
        │      START DISCHARGING        │─── S402
        └──────────────────────────────┘
                       │
                       ▼
        ┌──────────────────────────────┐
        │  SET FIRST DISCHARGING THRESHOLD │
        │  VOLTAGE BASED ON DIFFERENCE IN  │─── S404
        │  CELL VOLTAGE AND CURRENT SOC    │
        └──────────────────────────────┘
                       │
                       ▼
```

S406

DOES MINIMUM CELL VOLTAGE REACH FIRST DISCHARGING THRESHOLD VOLTAGE?  — No

Yes

S408

IS MAXIMUM CELL VOLTAGE LESS THAN OR EQUAL TO REFERENCE DISCHARGING THRESHOLD VOLTAGE?  — No

S412

SET SECOND DISCHARGING THRESHOLD VOLTAGE BASED ON DIFFERENCE BETWEEN AVERAGE VOLTAGE AND MAXIMUM CELL VOLTAGE

Yes

S414 — CONTINUE DISCHARGING

S416

DOES MINIMUM CELL VOLTAGE REACH SECOND DISCHARGING THRESHOLD VOLTAGE OR DOES MAXIMUM CELL VOLTAGE REACH REFERENCE DISCHARGING THRESHOLD VOLTAGE?  — No

Yes

TERMINATE DISCHARGING — S410

( END )

Europäisches
Patentamt

European
Patent Office

Office européen
des brevets

## EUROPEAN SEARCH REPORT

**Application Number**

EP 25 20 0024

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2013/257382 A1 (FIELD J DOUGLAS [US] ET AL) 3 October 2013 (2013-10-03)<br>* paragraph [0010] *<br>----- | 1-15 | INV.<br>H02J7/00<br><br>ADD.<br>H01M10/44<br>H01M10/42 |
| Y | CN 114 448 053 A (BEIJING HIBO SCIENCE AND TECH CO LTD) 6 May 2022 (2022-05-06)<br>* equation 1 *<br>----- | 1-15 | |

**TECHNICAL FIELDS
SEARCHED (IPC)**

H02J

The present search report has been drawn up for all claims

| Place of search | Date of completion of the search | Examiner |
|---|---|---|
| Munich | 25 November 2025 | Bocanegra Gallardo |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 20 0024

This annex lists the patent family members relating to the patent documents cited in the above-mentioned European search report.
The members are as contained in the European Patent Office EDP file on
The European Patent Office is in no way liable for these particulars which are merely given for the purpose of information.

25-11-2025

| Patent document cited in search report | Publication date | Patent family member(s) | Publication date |
|---|---|---|---|
| US 2013257382 A1 | 03-10-2013 | US 2013257382 A1<br>WO 2013151821 A2 | 03-10-2013<br>10-10-2013 |
| CN 114448053 A | 06-05-2022 | NONE | |

EPO FORM P0459

For more details about this annex : see Official Journal of the European Patent Office, No. 12/82